(19)

**Europäisches Patentamt**

**European Patent Office**

**Office européen des brevets**

(11) **EP 3 383 755 B1**

(12) **EUROPEAN PATENT SPECIFICATION**

(45) Date of publication and mention of the grant of the patent:
**20.10.2021 Bulletin 2021/42**

(21) Application number: **16805396.5**

(22) Date of filing: **01.12.2016**

(51) Int Cl.:
**B65D 41/00** *(2006.01)* **C08F 2/00** *(2006.01)*
**C08L 23/08** *(2006.01)*

(86) International application number:
**PCT/EP2016/079413**

(87) International publication number:
**WO 2017/093390 (08.06.2017 Gazette 2017/23)**

(54) **HDPE**

HDPE

HDPE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2015 EP 15197662**

(43) Date of publication of application:
**10.10.2018 Bulletin 2018/41**

(73) Proprietors:
• **Abu Dhabi Polymers Company Limited (Borouge) L.L.C.**
**Abu Dhabi (AE)**
• **Borealis AG**
**1220 Vienna (AT)**

(72) Inventors:
• **CHENG, Joy**
**4020 Linz (AT)**
• **BURYAK, Andrey**
**4021 Linz (AT)**

(74) Representative: **Dehns**
**St. Bride's House**
**10 Salisbury Square**
**London EC4Y 8JD (GB)**

(56) References cited:
EP-A1- 1 674 523     EP-A1- 2 017 302
EP-A1- 2 878 623     WO-A1-2006/045550
WO-A1-2013/045663     WO-A1-2014/180989
US-A1- 2008 011 709

EP 3 383 755 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a polyethylene polymer for injection or compression moulded articles, in particular for the manufacture of caps and closures. The present invention also relates to a process for the production of said polymer, an injection or compression moulded article comprising said polymer and to the use of said polymer for the production of an injection or compression moulded article such as a cap or closure. The polyethylene of the invention is a multimodal, high density polyethylene with a particular set of properties enabling the formation of moulded articles with advantageous features in terms of good stress crack resistance, and low creep strain, as evidenced by article aspect (low doming).

## Background

Injection moulding may be used to make a wide variety of articles including articles having relatively complex shapes and a range of sizes. Injection moulding is, for instance, suited to the manufacture of articles used as caps and closures for food and drink applications, such as for bottles containing carbonated or non-carbonated drinks, or for non-food applications like containers for cosmetics and pharmaceuticals.

Injection moulding is a moulding process in which a polymer is melted and then filled into a mould by injection. During initial injection, high pressure is used and the polymer melt is compressed. Thus, upon injection into the mould the polymer melt initially expands or "relaxes" to fill the mould. The mould, however, is at a lower temperature than the polymer melt, and therefore as the polymer melt cools, shrinkage tends to occur. To compensate for this effect, back pressure is applied. Thereafter the polymer melt is cooled further to enable the moulded article to be removed from the mould without causing deformation.

An important property of an injection moulded article is its stress crack resistance. It will be appreciated that the injection moulded articles of the invention should not exhibit brittle failure and should therefore possess a high stress crack resistance. An increase in stress cracking resistance is however, generally associated with decreases in tensile strength, e.g. in tensile modulus. Lower density leads therefore to high ESCR but lower tensile strength. It will also be appreciated that injection moulded articles are preferably stiff.

Decreases in tensile modulus associated with higher ESCR are particularly marked for HDPE. The present inventors sought new HDPEs, developed in particular for the cap and closure market, which possess improved stress cracking resistance and stiffness (i.e. high density). To add to the challenge however, these improvements must not be at the expense of processability of the polymer or the appearance of any article formed. Processability must be maintained or even improved to meet customer needs. Injection moulded articles are produced rapidly and any reduction in processability can increase cycle times and hence reduce process efficiency.

The present inventors have found that if HDPEs possess a certain relationship of creep strain at melt flow rates appropriate for injection moulding, a favourable combination of high stress crack resistance and processability can be achieved. In particular, the present invention describes a multimodal HDPE polymer with tailored molecular weight that results in improved (i.e. reduced) creep strain without reduction in FNCT. Our FNCT is clearly improved over a selection of comparable commercial polymer grades. In addition, caps or closures produced using this polymer have better aspect, specifically in terms of a lesser degree of doming.

Creep is the tendency of a solid material to deform permanently under the influence of mechanical stress and is not wanted by the polymer manufacturer. Our low creep polymers are therefore favourable.

A particular application for caps is to form a closure for a pressurized bottle. When the contents of the bottle are pressurized, e.g. when used with bottles containing carbonated beverages, the cap is subjected to a continual internal pressure. This can lead to deformation of the cap after prolonged storage, known in the field as "doming". In essence, the cap deforms upwards forming a dome shape or convex shape on top of the cap.

The occurrence of doming necessarily results in variation in the thickness of the walls of the cap, which may lead to weaknesses. The reduction in thickness of the domed surface means higher stress on the cap and higher chances of failure due to stress crack. This may result in a loss of pressure or ultimately even rupture of the cap.

Excessive doming may also reduce the aesthetic appeal of the product.

The invention relies on the use of polymers which have a particularly low creep strain. Low creep strain leads to less doming and a more favourable cap. This is achieved at high density and FNCT according to the invention.

The invention relies on the use of a multimodal polyethylene with a broad molecular weight distribution and ideally with a carefully selected relationship between Mz, Mn and Mw values. The polymers of this invention preferably possess a high molecular weight tail.

WO2014/180989 describes a polymer composition having a particular relationship between Mz, Mw and Mn which has been found to reduce the problem of angel hair. It is suggested that the problem of angel hair is exacerbated by the presence of high molecular weight chains within the polymer. The polymer composition described in WO2014/180989 has a less pronounced high molecular weight tail and thereby enables the formation of lower "high tip" on caps.

The present invention offers an alternative to the polymer compositions described in WO2014/180989. Without wishing to be bound by theory, it is thought that the multimodal polymer compositions of the present invention offer a complementary combination of Mw, Mz and Mn. In particular, polymer compositions of the invention have a somewhat higher molecular weight tail (x-axis) than those described in WO2014/180989, but still maintain an acceptable balance of creep strain, stress crack resistance and processability.

In particular, it has been found that by operating within particular values of Mw, Mn and Mz, it is possible to increase the ESCR of the blend whilst maintaining good processability and low creep strain.

In addition to having an improved balance of ESCR and processability and low creep strain, compositions of the invention unexpectedly exhibit reduced doming when formed into bottle closures.

In EP-A-1940942, HDPE compositions are described primarily for blow moulding applications. The compositions comprise a blend of unimodal HDPE and a high Mw unimodal polymer to thus form a bimodal composition. The polymers do not satisfy the relationship in claim 1 however.

EP 1 655 336 and EP 1 655 338 describe polymer compositions suitable for injection moulded caps and closures are described having particular relationships between SHI and MFR2.

EP 1 753 791 (WO2005/103100) describes a polyethylene defined by the degree of branching of the lowest 5-50 wt.% polyethylene chains and the degree of branching of the highest 5-50 wt.% polyethylene chains.

WO2008/137722 describes bimodal polyethylenes having high stiffness and high ESCR.

The present inventors have compared the polymer of the invention to a broad range of commercial injection moulding grades of comparable density to show that the relationship in claim 1 is not one which can be found in commercial multimodal polymers and is one which yields the advantageous properties highlighted above.

### Summary of Invention

Viewed from one aspect the invention provides a multimodal polyethylene polymer having an $MFR_2$ of 0.5 to 2.0 g/lOmin, an Mw/Mn of 6 or more, an Mz/Mw of 5.6 to 6.4, a density of 950 kg/m$^3$ or more, and wherein

$$\text{creep strain} \leq 0.0055\ln(\text{time}) + 0.014$$

wherein creep strain is measured according to ISO 899-1:2003; and wherein time is measured in seconds, in the region $200 \leq \text{time (s)} \leq 30{,}000$, preferably 50,000.

Viewed from another aspect the invention provides a multimodal polyethylene polymer having an $MFR_2$ of 0.5 to 2.0 g/lOmin, an Mw/Mn of 6 or more, an Mz/Mw of 5.6 to 6.4, a density of 950 kg/m$^3$ or more, and wherein

$$\text{creep strain} \leq 0.0055\ln(\text{time}) + 0.014$$

wherein creep strain is measured according to ISO 899-1:2003; and wherein time is measured in seconds, in the region $200 \leq \text{time (s)} \leq 30{,}000$, preferably 50,000; and wherein the multimodal polyethylene satisfies the relation:

$$M_z/M_w > 0.29\,(M_w/M_n) + 0.8.$$

Preferably, the multimodal polyethylene polymer comprises a lower molecular weight homopolymer component or copolymer component and a higher molecular weight copolymer component, e.g. with a C3-12 alpha olefin comonomer. More preferably, the multimodal polyethylene polymer comprises a lower molecular weight homopolymer component and a higher molecular weight copolymer component, e.g. with a C3-12 alpha olefin comonomer.

Thus, viewed from another aspect the invention provides a multimodal polyethylene polymer having 35 to 65% of a lower molecular weight homopolymer component (A) and 65 to 35% of a higher molecular weight copolymer component (B);

said polymer having an $MFR_2$ of 0.5 g/10 min to 2.0 g/lOmin, a density of 950 kg/m$^3$ or more, an Mw/Mn of 6 or more, an FNCT of 58 hrs or more and wherein

$$\text{creep strain} \leq 0.0055\ln(\text{time}) + 0.014$$

wherein creep strain is measured according to ISO 899-1:2003; and wherein time is measured in seconds, in at least the region 200 ≤ time (s) ≤ 30,000.

The polymer of the invention has a high molecular weight distribution Mw/Mn. This molecular distribution structure results in moulded articles, and in particular caps and closures, which have a good aspect (e.g. low degree of doming when formed into caps and exposed to a pressure differential).

Viewed from another aspect the invention provides an injection or compression moulded article, such as a cap or closure comprising a polymer as herein before defined. Such caps or closures may weight from 1 to 10 g.

Viewed from another aspect the invention provides the use of the polymer as hereinbefore defined in the manufacture of a injection moulded or compression article, such as a cap or closure.

Viewed from another aspect the invention provides a process for the preparation of a polyethylene as herein before defined comprising;

polymerising ethylene and optionally at least one C3-10 alpha olefin comonomer so as to form a lower molecular weight component (A); and subsequently
polymerising ethylene and optionally at least one C3-10 alpha olefin comonomer in the presence of component (A) so as to form a higher molecular weight component (B). The invention further comprises compression or injection moulding the product of said process to form an article. Preferably, the multimodal polyethylene polymer made in this process comprises a lower molecular weight homopolymer component and a higher molecular weight copolymer component, e.g. with a C3-10 alpha olefin comonomer.

**Definitions**

The term Mz refers to the Z average molecular weight of the polymer. The Mz is measured by establish thermodynamic equilibrium where molecules distribute according to molecular size. Mz is more sensitive than the other averages to the largest molecules present in the sample and hence the values we report in the present invention represent polymers with a pronounced high molecular weight tail.

**Detailed Description of Invention**

It has been found that the high density polyethylene polymer according to the invention provides an improved material for compression or especially injection moulding, in particular for cap and closure applications, which combines very good mechanical properties e.g. in terms of FNCT, with excellent processability (e.g. in terms of creep strain and G' modulus values) and aspect, e.g. in terms of low doming. Doming is a potential problem in caps whenever a difference in pressure exists between the inside and outside of a container.

The polymer of the invention is a multimodal high density ethylene polymer and may be an ethylene homopolymer or an ethylene copolymer. By ethylene copolymer is meant a polymer the majority by weight of which derives from ethylene monomer units. The comonomer contribution preferably is up to 10% by mol, more preferably up to 5 % by mol. Ideally however there are very low levels of comonomer present in the polymers of the present invention such as 0.1 to 2 mol%, e.g. 0.1 to 1 mol%. The polymer of the invention is preferably a copolymer.

The other copolymerisable monomer or monomers are preferably C3-12, especially C3-10, alpha olefin comonomers, particularly singly or multiply ethylenically unsaturated comonomers, in particular C3-10-alpha olefins such as propene, but-1-ene, hex-1-ene, oct-1-ene, and 4-methyl-pent-1-ene. The use of -1-hexene and 1-butene is particularly preferred. Ideally there is only one comonomer present.

It is preferred if the polymer of the invention is a copolymer and therefore comprises ethylene and at least one comonomer. Ideally that comonomer is 1-butene.

The polymer of the invention is multimodal and therefore comprises at least two components. The polymer of the invention preferably comprises

(A) a lower molecular weight first ethylene homo- or copolymer component, and
(B) a higher molecular weight second ethylene homo- or copolymer component.

It is generally preferred if the higher molecular weight component has an Mw of at least 5000 Da more than the lower molecular weight component, such as at least 10,000 Da more.

The HDPE of the invention is multimodal. Usually, a polyethylene composition comprising at least two polyethylene fractions, which have been produced under different polymerisation conditions resulting in different (weight average) molecular weights and molecular weight distributions for the fractions, is referred to as "multimodal". Accordingly, in this sense the compositions of the invention are multimodal polyethylenes. The prefix "multi" relates to the number of different polymer fractions the composition is consisting of. Thus, for example, a composition consisting of two fractions only is called "bimodal". Polymer compositions of the invention are preferably bimodal, i.e. they comprise one lower molecular weight component and one higher molecular weight component.

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

It is a requirement that polymer compositions of the invention satisfy the following relation in the interval $200 \leq$ time (s) $\leq 30{,}000$, preferably in the time interval $200 \leq$ time (s) $\leq 50{,}000{,}$:

$$\text{creep strain} \leq 0.0055\ln(\text{time}) + 0.014$$

wherein creep strain is measured according to ISO 899-1:2003 and wherein time is measured in seconds from the beginning of the creep test. The term "ln" has its usual meaning of "$\log_e$". It will be appreciated that this relation may also be satisfied for other values of t outside this range, e.g. up to a time of 100,000 secs.

Hence, the creep strain might be measured over a narrower time scale such as 200-30,000 secs or broader time scale such as 200 to 50,000 secs. .

The method for measuring creep strain is explained below in the test method section. It will be appreciated that the load on the sample should theoretically be applied instantaneously. In reality, that is not possible and the load is generally applied over a period of up to 10 secs. A slight difference in the time taken to apply the load to the sample could potentially affect the creep behaviour in the short-term. To ensure that the creep data is reliable and the effects of load application history are eliminated, the data is not reported for the first 100s (10 x maximum loading time). As is clear, creep strain is measured at 60°C and 6 MPa.

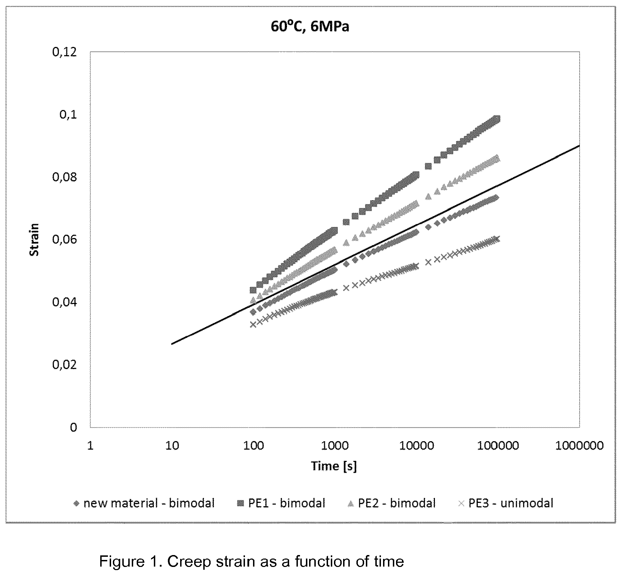

This equation defines a straight line in the creep strain vs time curve as shown in figure 1 (measured at 60°C and 6 MPa). The inventive polymers of the invention which lie below the line exhibit lower creep, i.e. better creep resistance than other multimodal polymers tested. The creep properties are more similar to those of a unimodal material but the multimodal polymers of the invention also possess excellent FNCT which is not present in the unimodal grades.

The polymer of the invention has an $MFR_2$ of 0.5 to 2 g/10 min, preferably 1.3 g/10 min or less, preferably 1.0 g/l0min or less, such as 0.9 g/l0min or less.. Thus, particularly suitable values of $MFR_2$ are from 0 0.5 to 1.3 g/10 min. In particular, suitable values of $MFR_2$ are from 0.6 to 2.0 g/10 min, such as 0.6 to 1.3 g/10 min.

The polymer of the invention preferably has an $MFR_{21}$ of 20 to 100 g/10 min, such as 25 to 90 g/l0min, more preferably 30 to 80 g/l0min, most preferably 30 to 60 g/l0min.

The polymer of the invention preferably has an $MFR_5$ of 0.5 to 20 g/l0min, such as 0.8 to 15 g/l0min, preferably 1.0 to 10 g/l0min.

The density of the polymer preferably is 950 kg/m³ or more. The polymers of the invention are therefore high density polyethylenes, HDPE. More preferably, the polymer has a density of 954 kg/m³ or more.

Furthermore, the density of the polymer preferably is 970 kg/m³ or lower, and more preferably is 965 kg/m³ or lower. An ideal density range is 950 to 960 kg/m³.

The polymer preferably has an environmental stress crack resistance measured as FNCT of 50 h or more, such as 58 h or more, more preferably 60 h or more, more preferably of 62 h or more. Whilst the FNCT is ideally as high as possible, typical upper limits might be 200 hrs, such as 150 hrs. It is particularly preferred that the polymer exhibits such high values of ESCR and exhibits a $MFR_2$ of 0.5 to 2.0 g/10 min, preferably a $MFR_2$ of 0.6 to 1.5 g/10 min. Polymers of the invention exhibit ESCR better than existing multimodal blends, whilst having greater processability.

It will be appreciated that the molecular weight and molecular distribution of the polymers of the invention is important. The polyethylene polymer preferably has a molecular weight distribution Mw/Mn, being the ratio of the weight average molecular weight Mw and the number average molecular weight Mn, of 6 or more, such as 10 or more, more preferably of 12 or more, still more preferably of 14 or more.

The polymer preferably has an Mw/Mn of 30 or below, more preferably of 25 or below.

The weight average molecular weight Mw of the polymer preferably is at least 50 kD, more preferably at least 80 kD, and most preferably at least 100 kD. Furthermore, the Mw of the composition preferably is at most 300 kD, more preferably 275 kD.

The Mz/Mw ratio is preferably no more than 8.0, more preferably no more than 7.0, especially no more than 6.5 such as 6.4 or less. The Mz/Mw ratio is preferably at least 3.0, more preferably at least 3.5. The range of 5.6 to 6.4 is especially preferred. The actual value of Mz is preferably in the range of 500kD to 800kD, such as 600 kD to 750 kD, such as 620 kD to 750 kD. Especially preferred are values of Mz in the range of 630 kD to 800 kD.

In one preferred embodiment the $MFR_2$ of the polymer composition is less than 1.30 g/lOmin and the Mz is above 560 kD, preferably above 600 kD, especially above 630 kD.

It is also preferred that compositions of the present invention have an elastic modulus G'(0.056 rad/s, 190 °C) of >100 Pa, preferably >130 Pa, especially >150 Pa. G' is a measure of processability of the polymer.

WO2014/180989 describes a polymer composition in which the values of Mw/Mn and Mz/Mw satisfy the following relation:

$$M_z/M_w \leq 0.29 \, (M_w/M_n) + 0.8. \, (XX)$$

In one embodiment, polymer compositions of the invention do not satisfy the relation (XX) above, i.e. they instead satisfy the following relation:

$$M_z/M_w > 0.29 \, (M_w/M_n) + 0.8 \, (XX')$$

As noted above, the polymers of the invention comprise at least a lower molecular weight component (A) and a higher molecular weight component (B). The weight ratio of fraction (A) to fraction (B) in the composition is in the range 30:70 to 70:30, more preferably 35:65 to 65:35, most preferably 40:60 to 60:40. In some embodiments the ratio may be 45 to 55 wt% of fraction (A) and 55 to 45 wt% fraction (B), such as 45 to 52 wt% of fraction (A) and 55 to 48 wt% fraction (B). It has been found however that the best results are obtained when the HMW component is present at the same percentage or even predominates, e.g. 50 to 54 wt% of the HMW component (B) and 50 to 46 wt% fraction (A).

Fractions (A) and (B) may both be ethylene copolymers or ethylene homopolymers, although preferably at least one of the fractions is an ethylene copolymer. Preferably, the polymer comprises an ethylene homopolymer and an ethylene copolymer component.

Where one of the components is an ethylene homopolymer, this is preferably the component with the lower weight average molecular weight (Mw), i.e. fraction (A). An ideal polymer is therefore a lower molecular weight homopolymer component (A) with a higher molecular weight component (B), ideally an ethylene butene higher molecular weight component.

The lower molecular weight fraction (A) preferably has an $MFR_2$ of 10 g/lOmin or higher, more preferably of 50 g/lOmin or higher, and most preferably 100 g/lOmin or higher.

Furthermore, fraction (A) preferably, has an $MFR_2$ of 1000 g/10 min or lower, preferably 800 g/10 min or lower, and most preferably 600 g/lOmin or lower.

The weight average molecular weight Mw of fraction (A) preferably is 10 kD or higher, more preferably is 20 kD or higher. The Mw of fraction (A) preferably is 90 kD or lower, more preferably 80 kD or lower, and most preferably is 70 kD or lower.

Preferably, fraction (A) is an ethylene homo- or copolymer with a density of at least 965 kg/m$^3$.

Most preferably, fraction (A) is an ethylene homopolymer. If fraction (A) is a copolymer, the comonomer is preferably 1-butene. The comonomer content of fraction (A), if it is a copolymer, is preferably very low, such as less than 0.2 mol%, preferably less than 0.1 mol%, especially less than 0.05 mol%. A further preferred option therefore, is for fraction (A) to be a homopolymer or a copolymer with a very low comonomer content, such as less than 0.2 mol%, preferably less than 0.1 mol%, especially less than 0.05 mol%. The higher Mw fraction (B) is then preferably a copolymer.

The higher molecular weight fraction (B) preferably has an Mw of 60 kD or higher, more preferably of 100 kD or higher. Furthermore, fraction (B) preferably has an Mw of 500 kD or lower, more preferably of 400 kD or lower.

Preferably, fraction (B) is an ethylene homo- or copolymer with a density of less than 965 kg/m$^3$.

Most preferably, fraction (B) is a copolymer. Preferred ethylene copolymers employ alpha-olefins (e.g. C3-12 alpha-olefins) as comonomers. Examples of suitable alpha-olefins include but-1-ene, hex-1-ene and oct-1-ene. But-1-ene is an especially preferred comonomer.

Where herein features of fractions (A) and/or (B) of the composition of the present invention are given, these values are generally valid for the cases in which they can be directly measured on the respective fraction, e.g. when the fraction is separately produced or produced in the first stage of a multistage process. However, the composition may also be and preferably is produced in a multistage process wherein e.g. fractions (A) and (B) are produced in subsequent stages. In such a case, the properties of the fractions produced in the second step (or further steps) of the multistage process can either be inferred from polymers, which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13.

Thus, although not directly measurable on the multistage process products, the properties of the fractions produced in higher stages of such a multistage process can be determined by applying either or both of the above methods. The skilled person will be able to select the appropriate method.

A multimodal (e.g. bimodal) polyethylene as hereinbefore described may be produced by mechanical blending two or more polyethylenes (e.g. monomodal polyethylenes) having differently centred maxima in their molecular weight distributions. The monomodal polyethylenes required for blending may be available commercially or may be prepared using any conventional procedure known to the skilled man in the art. Each of the polyethylenes used in a blend and/or the final polymer composition may have the properties hereinbefore described for the lower molecular weight component, higher molecular weight component and the composition, respectively.

The process of the invention preferably involves polymerising ethylene and optionally at least one C3-12 alpha olefin comonomer so as to form a lower molecular weight component (A); and subsequently polymerising ethylene and optionally at least one C3-12 alpha olefin comonomer in the presence of component (A) so as to form a higher molecular weight component (B).

It is preferred if at least one component is produced in a gas-phase reaction.

Further preferred, one of the fractions (A) and (B) of the polyethylene composition, preferably fraction (A), is produced in a slurry reaction, preferably in a loop reactor, and one of the fractions (A) and (B), preferably fraction (B), is produced in a gas-phase reaction.

To page 15

Preferably, the multimodal polyethylene composition may be produced by polymerisation using conditions which create a multimodal (e.g. bimodal) polymer product, e.g. using a catalyst system or mixture with two or more different catalytic sites, each site obtained from its own catalytic site precursor, or using a two or more stage, i.e. multistage, polymerisation process with different process conditions in the different stages or zones (e.g. different temperatures, pressures, polymerisation media, hydrogen partial pressures, etc).

Preferably, the multimodal (e.g. bimodal) composition is produced by a multistage ethylene polymerisation, e.g. using a series of reactors, with optional comonomer addition preferably in only the reactor(s) used for production of the higher/highest molecular weight component(s) or differing comonomers used in each stage. A multistage process is defined to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst. The polymerisation reactions used in each stage may involve conventional ethylene homopolymerisation or copolymerisation reactions, e.g. gas-phase, slurry phase, liquid phase polymerisations, using conventional reactors, e.g. loop reactors, gas phase reactors, batch reactors etc. (see for example WO97/44371 and WO96/18662).

Polymer compositions produced in a multistage process are also designated as "in-situ" blends.

Accordingly, it is preferred that fractions (A) and (B) of the polyethylene composition are produced in different stages of a multistage process.

Preferably, the multistage process comprises at least one gas phase stage in which, preferably, fraction (B) is produced.

Further preferred, fraction (B) is produced in a subsequent stage in the presence of fraction (A) which has been produced in a previous stage.

It is previously known to produce multimodal, in particular bimodal, olefin polymers, such as multimodal polyethylene, in a multistage process comprising two or more reactors connected in series. As instance of this prior art, mention may be made of EP 517 868, which is hereby incorporated by way of reference in its entirety, including all its preferred embodiments as described therein, as a preferred multistage process for the production of the polyethylene composition according to the invention.

Preferably, the main polymerisation stages of the multistage process for producing the composition according to the invention are such as described in EP 517 868, i.e. the production of fractions (A) and (B) is carried out as a combination of slurry polymerisation for fraction (A)/gas-phase polymerisation for fraction (B). The slurry polymerisation is preferably performed in a so-called loop reactor. Further preferred, the slurry polymerisation stage precedes the gas phase stage.

Optionally and advantageously, the main polymerisation stages may be preceded by a prepolymerisation, in which case up to 20 % by weight, preferably 1 to 10 % by weight, more preferably 1 to 5 % by weight, of the total composition is produced. The prepolymer is preferably an ethylene homopolymer (High Density PE). At the prepolymerisation, preferably all of the catalyst is charged into a loop reactor and the prepolymerisation is performed as a slurry polymerisation. Such a prepolymerisation leads to less fine particles being produced in the following reactors and to a more homogeneous product being obtained in the end.

The polymerisation catalysts include coordination catalysts of a transition metal, such as Ziegler-Natta (ZN), metallocenes, non-metallocenes, Cr-catalysts etc. The catalyst may be supported, e.g. with conventional supports including silica, A1-containing supports and magnesium dichloride based supports. Preferably the catalyst is a ZN catalyst, more preferably the catalyst is silica supported ZN catalyst,.

The Ziegler-Natta catalyst further preferably comprises a group 4 (group numbering according to new IUPAC system) metal compound, preferably titanium, magnesium dichloride and aluminium.

The catalyst may be commercially available or be produced in accordance or analogously to the literature. For the preparation of the preferable catalyst usable in the invention reference is made to WO2004055068 and WO2004055069 of Borealis, EP 0 688 794 and EP 0 810 235. The content of these documents in its entirety is incorporated herein by reference, in particular concerning the general and all preferred embodiments of the catalysts described therein as well as the methods for the production of the catalysts. Particularly preferred Ziegler-Natta catalysts are described in EP 0 810 235.

The resulting end product consists of an intimate mixture of the polymers from the two or more reactors, the different molecular-weight-distribution curves of these polymers together forming a molecular-weight-distribution curve having a broad maximum or two or more maxima, i.e. the end product is a bimodal or multimodal polymer mixture.

It is preferred that the base resin, i.e. the entirety of all polymeric constituents, of the composition according to the invention is a bimodal polyethylene mixture consisting of fractions (A) and (B), optionally further comprising a small prepolymerisation fraction in the amount as described above. It is also preferred that this bimodal polymer mixture has been produced by polymerisation as described above under different polymerisation conditions in two or more polymerisation reactors connected in series. Owing to the flexibility with respect to reaction conditions thus obtained, it is most preferred that the polymerisation is carried out in a loop reactor/a gas-phase reactor combination.

Preferably, the polymerisation conditions in the preferred two-stage method are so chosen that the comparatively low-molecular polymer having no content of comonomer is produced in one stage, preferably the first stage, owing to a high content of chain-transfer agent (hydrogen gas), whereas the high-molecular polymer having a content of comonomer is produced in another stage, preferably the second stage. The order of these stages may, however, be reversed.

In the preferred embodiment of the polymerisation in a loop reactor followed by a gas-phase reactor, the polymerisation temperature in the loop reactor preferably is 85 to 115 °C, more preferably is 90 to 105 °C, and most preferably is 92 to 100 °C, and the temperature in the gas-phase reactor preferably is 70 to 105 °C, more preferably is 75 to 100°C, and most preferably is 82 to 97°C.

A chain-transfer agent, preferably hydrogen, is added as required to the reactors, and preferably 100 to 800 moles of H2/kmoles of ethylene are added to the reactor, when the LMW fraction is produced in this reactor, and 50 to 500 moles of H2/kmoles of ethylene are added to the gas phase reactor when this reactor is producing the HMW fraction.

In the production of the composition of the present invention, preferably a compounding step is applied, wherein the composition of the base resin, i.e. the blend, which is typically obtained as a base resin powder from the reactor, is extruded in an extruder and then pelletised to polymer pellets in a manner known in the art.

The polyethylene composition may also contain minor quantities of additives such as pigments, nucleating agents, antistatic agents, fillers, antioxidants, etc., generally in amounts of up to 10 % by weight, preferably up to 5 % by weight.

Optionally, additives or other polymer components can be added to the composition during the compounding step in the amount as described above. Preferably, the composition of the invention obtained from the reactor is compounded in the extruder together with additives in a manner known in the art.

The polyethylene polymer of the invention may also be combined with other polymer components such as other polymers of the invention, with other HDPEs or with other polymers such as LLDPE or LDPE. However articles of the invention such as caps and closures are preferably at least 75 wt%, such as at least 90 wt% of the polymer of the invention, such as at least 95 wt%. In one embodiment, the articles consist essentially of the polymer of the invention. The term consists essentially of means that the polymer of the invention is the only "non additive" polyolefin present. It will be appreciated however that such a polymer may contain standard polymer additives some of which might be supported on a polyolefin (a so called masterbatch as is well known in the art). The term consists essentially of does not exclude the presence of such a supported additive.

## Applications

Still further, the present invention relates to an injection or compression moulded article, preferably a cap or closure, comprising a polyethylene composition as described above and to the use of such a polyethylene composition for the production of an injection or compression moulded article, preferably a cap or closure. Preferably, injection moulded articles are made.

Injection moulding of the composition hereinbefore described may be carried out using any conventional injection moulding equipment. A typical injection moulding process may be carried out a temperature of 190 to 275°C.

Still further, the present invention relates to a compression moulded article, preferably a caps or closure article, comprising a polyethylene polymer as described above and to the use of such a polyethylene polymer for the production of a compression moulded article, preferably a cap or closure.

Preferably, the composition of the invention is used for the production of a caps or closure article.

As noted above, the caps and closures of the present invention are advantageous not only because of their high ESCR, but also because they reduce doming.

The caps and closures of the invention may be of conventional size, designed therefore for bottles and the like. They are approximately 2 to 8 cm in outer diameter (measured across the solid top of the cap) depending on the bottle and provided with a screw. Cap height might be 0.8 to 3 cm.

Caps and closure may be provided with tear strips from which the cap detaches on first opening as is well known in the art. Caps may also be provided with liners.

Caps formed from the polymer composition of the invention exhibit low or negligible levels of doming when used as the cap for a pressurized container, i.e. a container which is pressurized above atmospheric pressure.

Viewed from another aspect the invention provides a cap or closure comprising a multimodal polyethylene polymer having 35 to 65% of a lower molecular weight homopolymer component (A) and 65 to 35% of a higher molecular weight copolymer component (B),

said polymer having an $MFR_2$ of 2.0 g/l0min or less, a density of 950 kg/m$^3$ or more, an Mw/Mn of 6 or more, an FNCT of 58 hrs or more and wherein

$$creep\ strain \leq 0.0055 ln(time) + 0.014$$

wherein creep strain is measured according to ISO 899-1:2003; and
wherein time is measured in seconds, in at least the region $200 \leq time\ (s) \leq 30,000$.

Viewed from another aspect therefore the invention provides a cap or closure as hereinbefore defined, screwed onto a beverage container containing a beverage which subjects the cap to an internal pressure. Preferably therefore, the invention relates to a cap of the invention screwed onto a beverage container containing a carbonated drink. The beverage container itself can be made conventionally, e.g. using PET.

Having regard to the doming test described in the Test Methods section, it is preferred that caps comprising, consisting essentially of, or consisting of the polymer composition of the invention, exhibit a value of $h_{domed} — h_{original}$ of no more than 1 mm, preferably less than 0.7 mm, especially less than 0.5 mm. Alternatively, the value $h_{domed}/h_{original}$ may be in the range of 1.0 to 1.1, preferably 1.0 to 1.07, especially 1.0 to 1.05, especially 1.0 to 1.03. Most preferably, the doming should be less than 0.5 mm.

A typical screw cap for a beverage bottle is 16 to 17 mm in height including the tear strip which breaks when the bottle is opened. A most preferred non-domed cap will exhibit less than 0.5 mm of doming when packaging a product that exerts an internal pressure such as a carbonated beverage.

It will be appreciated that any parameter mentioned above is measured according to the detailed test given below. In any parameter where a narrower and broader embodiment are disclosed, those embodiments are disclosed in connection with the narrower and broader embodiments of other parameters.

The invention will now be described with reference to the following non limiting examples and figures.

Figure 1 shows creep strain as a function of time for the examples.

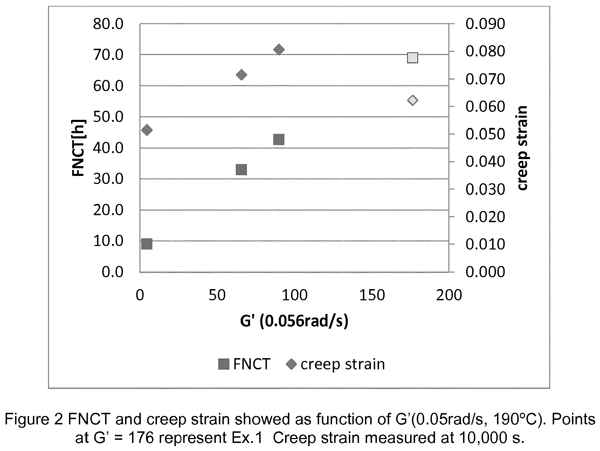

Figure 2 shows FNCT and creep strain as a function of G'.

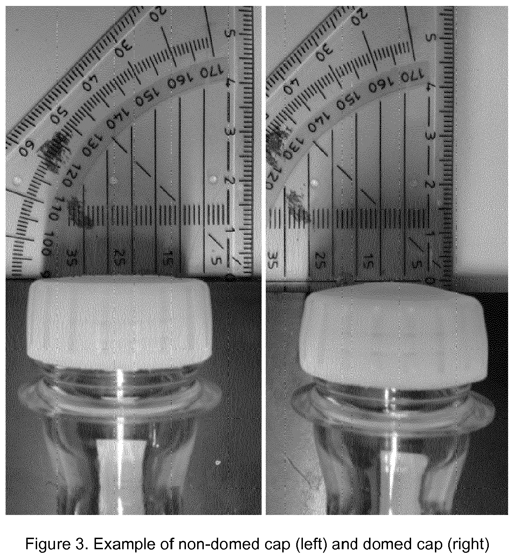

Figure 3 illustrates a close-up of bottle caps which show the absence or presence of doming.

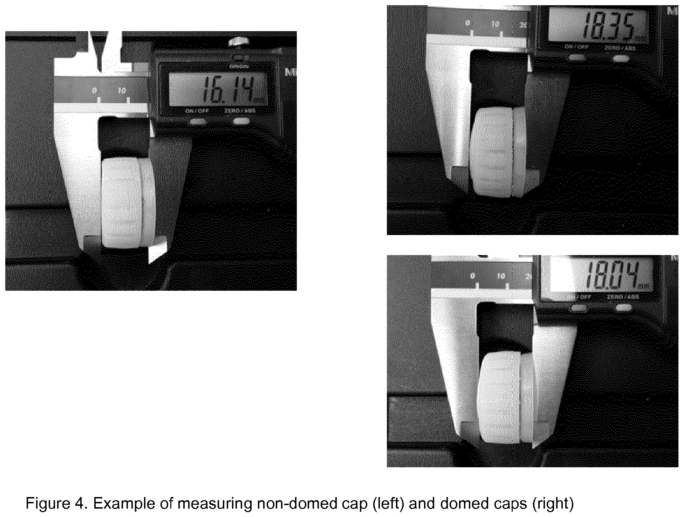

Figure 4 illustrates the measurement of the degree of doming prior to and after pressurizing.
Figure 5 shows the dimensions of a cap which is subjected to the doming test.

**Test Methods:**

Melt Flow Rate

The melt flow rate (MFR) is determined according to ISO 1133 and is indicated in g/10 min. The MFR is an indication of the melt viscosity of the polymer. The MFR is determined at 190°C for PE. The load under which the melt flow rate is determined is usually indicated as a subscript, for instance $MFR_2$ is measured under 2.16 kg load (condition D), $MFR_5$ is measured under 5 kg load (condition T) or $MFR_{21}$ is measured under 21.6 kg load (condition G).

The quantity FRR (flow rate ratio) is an indication of molecular weight distribution and denotes the ratio of flow rates at different loads. Thus, $FRR_{21/2}$ denotes the value of $MFR_{21}/MFR_2$.

Density

Density of the polymer was measured according to ISO 1183 / 1872-2B.

For the purpose of this invention the density of the blend can be calculated from the densities of the components according to:

$$\rho_b = \sum_i w_i \cdot \rho_i$$

where

$\rho_b$ is the density of the blend,
$w_i$ is the weight fraction of component "i" in the blend and
$\rho_i$ is the density of the component "i".

Quantification of microstructure by NMR spectroscopy

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. Standard single-pulse excitation was employed utilising the transient NOE at short recycle delays of 3s {pollard04, klimke06} and the RS-HEPT decoupling scheme{fillip05, griffin07}. A total of 1024 (1k) transients were acquired per spectrum. This setup was chosen due its high sensitivity towards low comonomer contents.

Quantitative $^{13}C\{^1H\}$ NMR spectra were processed, integrated and quantitative properties determined using custom spectral analysis automation programs. All chemical shifts are internally referenced to the bulk methylene signal ($\delta+$) at 30.00 ppm {randall89}.

Characteristic signals corresponding to the incorporation of 1-butene were observed (randall89) and all contents calculated with respect to all other monomers present in the polymer.

Characteristic signals resulting from isolated 1-butene incorporation i.e. EEBEE comonomer sequences, were observed. Isolated 1-butene incorporation was quantified using the integral of the signal at 39.84 ppm assigned to the *B2 sites, accounting for the number of reporting sites per comonomer:

$$B = I_{*B2}$$

With no other signals indicative of other comonomer sequences, i.e. consecutive comonomer incorporation, observed the total 1-butene comonomer content was calculated based solely on the amount of isolated 1-butene sequences:

$$B_{total} = B$$

The relative content of ethylene was quantified using the integral of the bulk methylene ($\delta+$) signals at 30.00 ppm:

$$E = (1/2)*I_{\delta+}$$

The total ethylene comonomer content was calculated based the bulk methylene signals and accounting for ethylene units present in other observed comonomer sequences or end-groups:

$$E_{total} = E + (5/2)*B$$

The total mole fraction of 1-butene in the polymer was then calculated as:

$$fB = (\ B_{total}\ /\ (\ E_{total} + B_{total}\ )$$

The total comonomer incorporation of 1-butene in mole percent was calculated from the mole fraction in the usual manner:

$$B\ [mol\%] = 100 * fB$$

The total comonomer incorporation of 1-butene in weight percent was calculated from the mole fraction in the standard manner:

$$B\ [wt\%] = 100 * (\ fB * 56.11)\ /\ (\ (fB * 56.11) + (fH * 84.16) + ((1-(fB + fH)) * 28.05)\ )$$

Details of these procedures can be found in Klimke et al. Macromol. Chem. Phys. 2006;207:382, Pollard et al. Macromolecules 2004;37:813, Filip et al. J. Mag. Resn. 2005, 176, 239 , Griffin et al. Mag. Res. in Chem. 2007 45, S1, S198, and J. Randall Rev. Macromol. Chem. Phys. 1989, C29, 201.

Molecular weight

Molecular weight averages, molecular weight distribution ( Mn, Mw,Mz MWD)

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N}\left(\frac{A_i}{M_i}\right)} \quad (1)$$

$$M_w = \frac{\sum_{i=1}^{N} [(A]_i\ x\ M_i)}{\sum_{i=1}^{N} A_i} \quad (2)$$

$$M_z = \frac{\sum_{i=1}^{N} [(A]_i\ x\ M_i^2)}{\sum_{i=1}^{N}\left(\frac{A_i}{M_i}\right)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 µL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \text{ x } 10^{-3} \text{ mL/g}, \alpha_{PS} = 0.655$$

$$K_{PE} = 39 \text{ x } 10^{-3} \text{ mL/g}, \alpha_{PE} = 0.725$$

$$K_{PP} = 19 \text{ x } 10^{-3} \text{ mL/g}, \alpha_{PP} = 0.725$$

A third order polynomial fit was used to fit the calibration data.

All samples were prepared in the concentration range of 0,5 -1 mg/ml and dissolved at 160 °C for 2.5 hours for PP or 3 hours for PE under continuous gentle shaking.

Environmental Stress Crack Resistance

Environmental Stress Crack Resistance (ESCR) may be measured according to the full notch creep test method (FNCT) according to ISO/DIS 16770 at 50°C with a notch depth of 1 mm and specimen dimensions 6 mm x 6 mm x 90 mm. The solvent used was 2 wt% Arcopal N110 in deionized water. Compression moulded samples were employed (ISO 1872-2), cooling rate at compression moulding: 15 K/min. Time to failure ($t_f$) was measured at 4 different stress levels ($\sigma$) between 5-7 MPa. A plot of log($t_f$) vs. log($\sigma$) was fitted with a straight line and a equation of the form $log(t_f) = A \, log(\sigma)+B$. FNCT value at 6 MPa stress is then calculated based on linear interpolation using the equation.

Creep strain

Creep tests according to ISO 899-1:2003, at 60°C and 6 MPa were conducted to study the time and temperature dependent deformation behaviour levels using standard specimens (ISO multi-purpose specimens). The specimens were preconditioned at the test temperature for 15 minutes. The respective stress level was approached by a screw-driven machine within 5-10 seconds and was held constant for $10^5$ s. A slight difference in the time taken to apply the load to the sample could potential affect the creep behaviour in the short-term. To ensure that the creep data is reliable, data is not therefore reported until a time period that is at least 10 x loading time, here 100 secs.

The strain was measured with a camera by online evaluation of the displacement of the gauge section marks (initial gauge length of 50 mm) in the pictures. The strain as well as the creep modulus were evaluated as a function of time for each test conditions.

Dynamic Shear Measurements (frequency sweep measurements)

The characterisation of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at 190°C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \tag{2}$$

where

$\sigma_0$ and $\gamma_0$ are the stress and strain amplitudes, respectively

$\omega$ is the angular frequency

$\delta$ is the phase shift (loss angle between applied strain and stress response)

t is the time

Dynamic test results are typically expressed by means of several different rheological functions, namely the shear storage modulus G', the shear loss modulus, G", the complex shear modulus, G*, the complex shear viscosity, h*, the dynamic shear viscosity, h', the out-of-phase component of the complex shear viscosity h" and the loss tangent, tan d which can be expressed as follows:

$$G' = \frac{\sigma_0}{\gamma_0} \cos\delta \ [\text{Pa}] \tag{3}$$

$$G' = \frac{\sigma_0}{\gamma_0} \sin\delta \ [\text{Pa}] \tag{4}$$

$$G^* = G' + iG'' \ [\text{Pa}] \tag{5}$$

$$\eta^* = \eta' - i\eta'' \ [\text{Pa.s}] \tag{6}$$

$$\eta' = \frac{G''}{\omega} \ [\text{Pa.s}] \tag{7}$$

$$\eta'' = \frac{G'}{\omega} \ [\text{Pa.s}] \tag{8}$$

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362
[2] The influence of molecular structure on some rheological properties of polyethylene", Heino, E.L., Borealis Polymers Oy, Porvoo, Finland, Annual Transactions of the Nordic Rheology Society, 1995.).
[3] Definition of terms relating to the non-ultimate mechanical properties of polymers, Pure & Appl. Chem., Vol. 70, No. 3, pp. 701-754, 1998.

Doming test

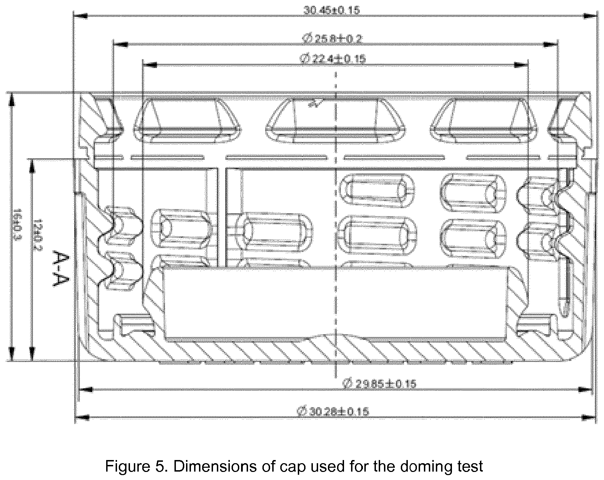

A screw cap having the dimensions illustrated in Figure 5 is prepared by injection molding of a polymer composition using an appropriate mould. The outer diameter of the cap at the base after injection molding is 30.45mm $\pm$

0.15 mm and the height of the cap is 16mm $\pm$ 0.3mm. The cap is screwed onto a complementary thread using manual torque until the threads are fully engaged. The cap is then internally pressurized at 10 bar with pressurised air for a period of 0.1 hours. The pressure is released and the cap is removed. The height of the cap ($h_{domed}$) is measured using calipers (accuracy of device at least $10\mu$m / repeatability 30 $\mu$m) from the base of the cap to the highest point of the top surface. The degree of doming can be calculated as the difference in height ($h_{domed}$ — $h_{original}$). The value $h_{original}$ corresponds to the height of the cap prior to pressurization.

**Experimental**

**Catalyst preparation**

Complex preparation:

87 kg of toluene was added into the reactor. Then 45.5 kg Bomag A in heptane was also added in the reactor. 161 kg 99.8 % 2-ethyl-1-hexanol was then introduced into the reactor at a flow rate of 24-40 kg/h. The molar ratio between BOMAG-A and 2-ethyl-1-hexanol was 1:1.83.

**Solid catalyst component preparation:**

275 kg silica (ES747JR of Crossfield, having average particle size of 20 mm) activated at 600 °C in nitrogen was charged into a catalyst preparation reactor. Then, 411 kg 20 % EADC (2.0 mmol/g silica) diluted in 555 litres pentane was added into the reactor at ambient temperature during one hour. The temperature was then increased to 35 °C while stirring the treated silica for one hour. The silica was dried at 50 °C for 8.5 hours. Then 655 kg of the complex prepared as described above (2 mmol Mg/g silica) was added at 23 °C during ten minutes. 86 kg pentane was added into the reactor at 22 °C during ten minutes. The slurry was stirred for 8 hours at 50 °C. Finally, 52 kg $TiCl_4$ was added during 0.5 hours at 45 °C. The slurry was stirred at 40 °C for five hours. The catalyst was then dried by purging with nitrogen.

**Production of the multimodal ethylene polymer of the invention**

Into a first loop reactor having a volume of 50 dm$^3$ and operating at a temperature of 70 °C and a pressure of 61 bar, 47 kg/h propane (C3), 2kg/h ethylene (C2), and 5 g/h hydrogen (H2) were introduced for conducting a pre-polymerization step. In addition 15 g/h of a solid polymerisation catalyst component, preparation method described below, was introduced into the reactor together with triethylaluminium cocatalyst so that the ratio of aluminium to titanium was 11 mol/mol. The polymer production rate in this prepolymerization reactor was about 2 kg/h.

The slurry was withdrawn intermittently from the prepolymerization reactor and directed to a second loop reactor having a volume of 350 dm$^3$ and operating at a temperature of 95 °C and a pressure of 58 bar for producing the LMW component. Additionally, 130 kg/h propane, ethylene and hydrogen were fed to the second loop reactor whereby the ethylene concentration and the molar hydrogen to ethylene ratio for example Ex 1 are listed in Table 1. The production split, density and melt flow rates of the polymer fractions produced in the second loop reactor are listed in Table 1. The polymer production rate in this second loop reactor was about 38 kg/h.

The slurry was withdrawn intermittently from the second loop reactor by using settling legs and directed to a flash vessel operated at a temperature of 50°C and a pressure of 3 bar where the hydrocarbons were substantially removed from the polymer. From the flash vessel the polymer was directed to a gas phase reactor. The gas phase reactor was operated at a temperature of 85 °C and a pressure of 20 bar for producing the HMW component. Additional ethylene, 1-butene comonomer, nitrogen as inert gas and hydrogen were fed whereby the ethylene concentration, the molar 1-butene to ethylene ratio and the molar hydrogen to ethylene ratio as well as the production split, the melt flow rates and the density of the polymers of example Ex 1 withdrawn from the gas phase reactor are listed in Table 1. The polymer production rate in this gas phase reactor was about 46 kg/h.

The resulting polymer powder was dried from hydrocarbons and mixed with commercially available antioxidant and calcium stearate in conventional amounts. The mixture was then extruded in a conventional manner under nitrogen atmosphere into pellets by using a counter-rotating twin screw extruder CIM90P (manufactured by Japan Steel Works). The properties of the compounded composition (Inv.C1) are shown in Table 2. The temperature profile in each zone was 90/120/190/250°C.

Table 1: Polymerization conditions

|  | Ex 1 |
|---|---|

(continued)

| Prepolymerizer: | |
|---|---|
| Temperature [°C] | 70 |
| Pressure [bar] | 61 |
| Production rate [kg/h] | 2 |
| Split [wt%] | 2 |
| **Loop reactor:** | |
| Temperature [°C] | 95 |
| Pressure [bar] | 58 |
| H2/C2 [mol/kmol] | 471 |
| C2-concentration [mol%] | 6 |
| C4/C2 [mol/kmol] | 0 |
| Production rate [kg/h] | 38 |
| Split [wt%] | 47 |
| MFR2 [g/10 min] | 400 |
| Density [kg/m$^3$] | 970 |
| **Gas phase reactor:** | |
| Temperature [°C] | 85 |
| Pressure [bar] | 20 |
| H2/C2 [mol/kmol] | 76 |
| C4/C2 [mol/kmol] | 61 |
| C2-concentration [mol%] | 11 |
| Split [wt%] | 51 |
| Production rate [kg/h] | 46 |
| MFR2 [g/10 min] | 0,8 |
| MFR5 [g/10 min] | 3,6 |
| Density [kg/m$^3$] | 955,8 |

The polymer of the invention is compared with certain commercial grades, identified through their grade names.

Table 2

| Material properties | | CE1 | ELTEX SUPERSTRESS CAP508 | SABIC M40060S | Example 1 |
|---|---|---|---|---|---|
| | | | CE2 | CE3 | |
| polymer type | | bimodal | bimodal | unimodal | bimodal |
| MFR2 | g/10min | 1,50 | 1,69 | 1,69 | 0,80 |
| Density | kg/m3 | 954,4 | 953,9 | 959,1 | 955,5 |
| FNCT (6 MPa, 50°C) | h | 42,70 | 33,00 | 9,00 | 65,50 |
| Mz | g/mol | 498800 | 416278 | 220676 | 655000 |
| Mw/Mn | | 12,35 | 10,62 | 4,13 | 14,92 |

(continued)

| Material properties | | | ELTEX SUPERSTRESS CAP508 | SABIC M40060S | |
| --- | --- | --- | --- | --- | --- |
| | | CE1 | CE2 | CE3 | Example 1 |
| Mz/Mw | | 5,1 | 4,7 | 3,1 | 5,6 |
| comonomer content | mol% | 0,5 | 0,5 | 0,05 | 0,3 |
| G' (0.056rad/s) | Pa | 89,90 | 65,9 | 4,60 | 176,71 |

The value of creep strain as a function of time at 60 °C under 6 MPa pressure is shown in Figure 1. The raw data is presented in table 3 below. Ex 1 shows lower creep strain than bimodal blends CE1 and CE2, which did not satisfy the creep strain relation. Although the unimodal blend (SABIC M40060S) exhibited still lower creep strain than Ex 1, the ESCR (FNCT) of the unimodal blend was much lower than the polyethylene blend of the invention, as can be seen from the table above.

**Injection moulding of the screw caps:**

The polymer of the invention was formed into a cap. Injection moulding of the screw caps (type: PE PCO1881 short neck) was done on an Engel speed 180, melt temperature ~ 225°C, injection speed: relativ 180 mm/s, absolut 173 cm$^3$/s; injection time 0,35 s, back pressure 1 bar. The mould was equipped with a hot runner system, mould-temperature: 10 °C. Caps were subject to a doming test as described in the description of methods section. Caps according to the polymers of claim 1 exhibit doming of less than 0.5 mm.

| CE1 | | | ELTEX SUPERSTRESS CAP508 | | | SABIC M40060S | | | IE1 | | |
|---|---|---|---|---|---|---|---|---|---|---|---|
| time, s | strain, - | stress, Mpa | time, s | strain, - | stress, Mpa | time, s | strain, - | stress, Mpa | time s | strain - | modulus Mpa |
| 200 | 0.049901 | 119.6029 | 200 | 0.045775 | 130.2359 | 200 | 0.036383 | 163.9539 | 200 | 0.041081 | 145.3546 |
| 300 | 0.053283 | 112.0121 | 300 | 0.048623 | 122.6088 | 300 | 0.038239 | 155.9961 | 300 | 0.04351 | 137.2396 |
| 400 | 0.055627 | 107.2926 | 400 | 0.050595 | 117.8295 | 400 | 0.039493 | 151.0443 | 400 | 0.045189 | 132.1412 |
| 500 | 0.057419 | 103.9443 | 500 | 0.052103 | 114.419 | 500 | 0.040434 | 147.5288 | 500 | 0.046468 | 128.5045 |
| 600 | 0.058868 | 101.3847 | 600 | 0.053324 | 111.8 | 600 | 0.041184 | 144.8396 | 600 | 0.047498 | 125.7157 |
| 700 | 0.060085 | 99.33129 | 700 | 0.054349 | 109.6914 | 700 | 0.041808 | 142.681 | 700 | 0.048361 | 123.4743 |
| 800 | 0.061134 | 97.62766 | 800 | 0.055232 | 107.9367 | 800 | 0.042339 | 140.889 | 800 | 0.049101 | 121.6126 |
| 900 | 0.062055 | 96.17868 | 900 | 0.056009 | 106.4406 | 900 | 0.042803 | 139.3639 | 900 | 0.049749 | 120.028 |
| 1000 | 0.062876 | 94.92257 | 1000 | 0.056701 | 105.1408 | 1000 | 0.043213 | 138.041 | 1000 | 0.050325 | 118.6539 |
| 3000 | 0.071353 | 83.64567 | 3000 | 0.063849 | 93.37071 | 3000 | 0.047301 | 126.1114 | 3000 | 0.056155 | 106.336 |
| 5000 | 0.075287 | 79.27454 | 5000 | 0.067152 | 88.77754 | 5000 | 0.049119 | 121.4429 | 5000 | 0.058777 | 101.5929 |
| 7000 | 0.077891 | 76.62444 | 7000 | 0.069326 | 85.99365 | 7000 | 0.0503 | 118.5914 | 7000 | 0.060481 | 98.7308 |
| 9000 | 0.079845 | 74.74898 | 9000 | 0.070949 | 84.02681 | 9000 | 0.051177 | 116.56 | 9000 | 0.061743 | 96.71163 |
| 10000 | 0.080667 | 73.98724 | 10000 | 0.071629 | 83.22917 | 10000 | 0.051543 | 115.7309 | 10000 | 0.06227 | 95.89287 |
| 30000 | 0.089331 | 66.81195 | 30000 | 0.078683 | 75.76719 | 30000 | 0.055384 | 107.7052 | 30000 | 0.067711 | 88.18769 |
| 50000 | 0.093368 | 63.92318 | 50000 | 0.081913 | 72.77952 | 50000 | 0.057259 | 104.1789 | 50000 | 0.07022 | 85.03651 |

**Claims**

1. A multimodal polyethylene polymer having an $MFR_2$ of 0.5 to 2.0 g/lOmin, an Mw/Mn of 6 or more, an Mz/Mw of 5.6 to 6.4, a density of 950 kg/m$^3$ or more, and wherein

$$creep\ strain \leq 0.0055 ln(time) + 0.014$$

wherein creep strain is measured according to ISO 899-1:2003; and
wherein time is measured in seconds, in the region $200 \leq time\ (s) \leq 30,000$, preferably $200 \leq time\ (s) \leq 50,000$.

2. A multimodal polyethylene polymer as claimed in claim 1 wherein the multimodal polyethylene satisfies the relation:

$$M_z/M_w > 0.29\ (M_w/M_n) + 0.8.$$

3. A multimodal polyethylene polymer as claimed in claim 1 or 2 having a lower molecular weight homopolymer component and a higher molecular weight copolymer component, e.g. with a C3-12 alpha olefin comonomer; and wherein said polymer has an FNCT of 58 hrs or more.

4. A multimodal polyethylene polymer as claimed in claim 1 to 3 having an FNCT of 58 hrs or more, preferably 60 hrs or more.

5. A multimodal polyethylene polymer as claimed in any preceding claim which is bimodal.

6. A multimodal polyethylene polymer as claimed in any preceding claim having a value of G'(0.05rad/s, 190 °C) greater than 100 Pa, preferably greater than 130 Pa, especially greater than 160 Pa.

7. A multimodal polyethylene polymer as claimed in any preceding claim having a Mz $\geq$ 560 kDa, preferably $\geq$ 600 kDa, especially $\geq$ 630 kDa.

8. A multimodal polyethylene polymer as claimed in any preceding claim having a $MFR_2$ of 0.5 to 1.3 g/10 min.

9. A multimodal polyethylene polymer as claimed in any preceding claim having a lower molecular weight (LMW) homopolymer component and a higher molecular weight (HMW) ethylene copolymer component, preferably wherein said HMW copolymer component comprises at least one C3-12 alpha olefin, preferably but-1-ene, hex-1-ene and oct-1-ene.

10. A multimodal polyethylene polymer as claimed in claim 9 having 40 to 60 wt% of a HMW component (B) and 60 to 40 wt% LMW component (A), preferably having 48 to 55 wt% of a HMW component (B) and 52 to 45 wt% LMW component (A).

11. A multimodal polyethylene polymer as claimed in any preceding claim having 0.1 to 1 mol% comonomer.

12. A multimodal polyethylene polymer as claimed in any preceding claim wherein said polymer is a copolymer with the comonomer 1-butene.

13. A multimodal polyethylene polymer as claimed in any preceding claim having an $MFR_5$ of 1.0 to 20 g/lOmin, such as 2.0 to 20 g/lOmin.

14. A multimodal polyethylene polymer having 35 to 65% of a lower molecular weight homopolymer component (A) and 65 to 35% of a higher molecular weight copolymer component (B);

said polymer having an $MFR_2$ of 0.5 g/10 min to 2.0 g/lOmin, a density of 950 kg/m$^3$ or more, an Mw/Mn of 6 or more, an FNCT of 58 hrs or more and wherein

$$creep\ strain \leq 0.0055 ln(time) + 0.014$$

wherein creep strain is measured according to ISO 899-1:2003; and
wherein time is measured in seconds, in at least the region 200 ≤ time (s) ≤ 30,000.

15. An injection or compression moulded article, such as a cap or closure, comprising a polymer as claimed in claim 1 to 14.

16. Use of the polymer as claimed in any one of claims 1 to 14 in the manufacture of a injection or compression moulded article, such as a cap or closure.

17. A process for the preparation of a polyethylene as claimed in claims 1 to 14 comprising;
polymerising ethylene and optionally at least one C3-10 alpha olefin comonomer so as to form a lower molecular weight component (A); and subsequently
polymerising ethylene and optionally at least one C3-10 alpha olefin comonomer in the presence of component (A) so as to form a higher molecular weight component (B).

**Patentansprüche**

1. Multimodales Polyethylenpolymer mit einem $MFR_2$ von 0,5 bis 2,0 g/10 min, einem Mw/Mn von 6 oder mehr, einem Mz/Mw von 5,6 bis 6,4, einer Dichte von 950 kg/m$^3$ oder mehr, wobei

$$Kriechdehnung \leq 0,0055\ ln\ (Zeit) + 0,014$$

wobei Kriechdehnung gemäß ISO899-1:2003 gemessen wird; und
wobei Zeit in Sekunden gemessen wird, im Bereich 200 ≤ Zeit (s) ≤ 30.000, bevorzugt 200 ≤ Zeit (s) ≤ 50.000.

2. Multimodales Polyethylenpolymer nach Anspruch 1, wobei das multimodale Polyethylen die Beziehung erfüllt:

$$M_z/M_w > 0.29\ (M_w M_n) + 0.8.$$

3. Multimodales Polyethylenpolymer nach Anspruch 1 oder 2, das eine Homopolymerkomponente mit niedrigerem Molekulargewicht und eine Copolymerkomponente mit höherem Molekulargewicht aufweist, z. B. mit einem C3-12-Alpha-Olefin-Comonomer; und
wobei das Polymer eine FNCT von 58 h oder mehr aufweist.

4. Multimodales Polyethylenpolymer nach Anspruch 1 bis 3, das eine FNCT von 58 h oder mehr, bevorzugt von 60 h oder mehr, aufweist.

5. Multimodales Polyethylenpolymer nach einem der vorstehenden Ansprüche, das bimodal ist.

6. Multimodales Polyethylenpolymer nach einem der vorstehenden Ansprüche, das einen G'-Wert (0,05 rad/s, 190 °C) von mehr als 100 Pa, bevorzugt von mehr als 130 Pa, insbesondere von mehr als 160 Pa aufweist.

7. Multimodales Polyethylenpolymer nach einem der vorstehenden Ansprüche, das ein Mz ≥ 560 kDa, bevorzugt ≥ 600 kDa, insbesondere ≥ 630 kDa aufweist.

8. Multimodales Polyethylenpolymer nach einem der vorstehenden Ansprüche, das einen $MFR_2$ von 0,5 bis 1,3 g/10 min aufweist.

9. Multimodales Polyethylenpolymer nach einem der vorstehenden Ansprüche, das eine Homopolymerkomponente mit niedrigerem Molekulargewicht (LMW) und eine Ethylencopolymerkomponente mit höherem Molekulargewicht (HMW) aufweist, wobei die HMW-Copolymerkomponente bevorzugt mindestens ein C3-12-Alpha-Olefin, vorzugsweise But-1-en, Hex-1-en und Oct-1-en umfasst.

10. Multimodales Polyethylenpolymer nach Anspruch 9, das 40 bis 60 Gew.-% einer HMW-Komponente (B) und 60 bis 40 Gew.-% LMW-Komponente (A) aufweist, bevorzugt 48 bis 55 Gew.-% einer HMW-Komponente (B) und 52 bis 45 Gew.-% LMW-Komponente (A) aufweist.

**11.** Multimodales Polyethylenpolymer nach einem der vorstehenden Ansprüche, das 0,1 bis 1 Mol-% Comonomer aufweist.

**12.** Multimodales Polyethylenpolymer nach einem der vorstehenden Ansprüche, wobei das Polymer ein Copolymer mit dem Comonomer 1-Buten ist.

**13.** Multimodales Polyethylenpolymer nach einem der vorstehenden Ansprüche, das einen $MFR_5$ von 1,0 bis 20 g/10 min, wie 2,0 bis 20 g/10 min, aufweist.

**14.** Multimodales Polyethylenpolymer, das 35 bis 65% einer Homopolymerkomponente mit niedrigerem Molekulargewicht (A) und 65 bis 35 % einer Copolymerkomponente mit höherem Molekulargewicht (B) aufweist;

wobei das Polymer eine $MFR_2$ von 0,5 g/10 min bis 2,0 g/10 min, eine Dichte von 950 kg/m$^3$ oder mehr, ein Mw/Mn von 6 oder mehr, eine FNCT von 58 h oder mehr aufweist und wobei

$$Kriechdehnung \leq 0,0055 \ln (Zeit) + 0,014$$

wobei Kriechdehnung gemäß ISO899-1:2003 gemessen wird; und
wobei Zeit in Sekunden gemessen wird, in zumindest dem Bereich $200 \leq Zeit (s) \leq 30.000$.

**15.** Spritzgegossener oder formgepresster Gegenstand, wie eine Kappe oder ein Verschluss, umfassend ein Polymer nach Anspruch 1 bis 14.

**16.** Verwendung des Polymers nach einem der Ansprüche 1 bis 14 bei der Herstellung eines spritzgegossenen oder formgepressten Gegenstands, wie einer Kappe oder eines Verschlusses.

**17.** Verfahren zur Herstellung eines Polyethylens nach den Ansprüchen 1 bis 14, umfassend;
Polymerisieren von Ethylen und optional mindestens einem C3-10-Alpha-Olefin-Comonomer, um eine Komponente mit geringerem Molekulargewicht (A) zu bilden; und anschließend
Polymerisieren von Ethylen und optional mindestens einem C3-10-Alpha-Olefin-Comonomer in Gegenwart der Komponente (A), um eine Komponente (B) mit höherem Molekulargewicht zu bilden.

**Revendications**

**1.** Polymère de polyéthylène multimodal présentant un $MFR_2$ de 0,5 à 2,0 g/10 min, un Mw/Mn de 6 ou plus, un Mz/Mw de 5,6 à 6,4, une masse volumique de 950 kg/m$^3$ ou plus, et dans lequel

$$allongement\ de\ fluage \leq 0,0055\ln(temps) + 0,014$$

dans lequel l'allongement de fluage est mesuré selon l'ISO 899-1:2003 ; et
dans lequel le temps est mesuré en secondes, dans la région $200 \leq temps (s) \leq 30\ 000$, de préférence $200 \leq temps (s) \leq 50\ 000$.

**2.** Polymère de polyéthylène multimodal selon la revendication 1 dans lequel le polyéthylène multimodal satisfait la relation :

$$M_z/M_w > 0,29 (M_w/M_n) + 0,8.$$

**3.** Polymère de polyéthylène multimodal selon la revendication 1 ou 2 présentant un composant homopolymère de poids moléculaire inférieur et un composant copolymère de poids moléculaire supérieur, par exemple avec un comonomère d'alpha-oléfine en C3-12 ;
et dans lequel ledit polymère présente un FNCT de 58 h ou plus.

**4.** Polymère de polyéthylène multimodal selon la revendication 1 à 3 présentant un FNCT de 58 h ou plus, de préférence de 60 h ou plus.

**5.** Polymère de polyéthylène multimodal selon une quelconque revendication précédente qui est bimodal.

**6.** Polymère de polyéthylène multimodal selon une quelconque revendication précédente présentant une valeur de G' (0,05 rad/s, 190 °C) supérieure à 100 Pa, de préférence supérieure à 130 Pa, en particulier supérieure à 160 Pa.

**7.** Polymère de polyéthylène multimodal selon une quelconque revendication précédente présentant un Mz ≥ 560 kDa, de préférence ≥ 600 kDa, en particulier ≥ 630 kDa.

**8.** Polymère de polyéthylène multimodal selon une quelconque revendication précédente présentant un $MFR_2$ de 0,5 à 1,3 g/10 min.

**9.** Polymère de polyéthylène multimodal selon une quelconque revendication précédente présentant un composant homopolymère de poids moléculaire inférieur (LMW) et un composant copolymère d'éthylène de poids moléculaire supérieur (HMW), de préférence dans lequel ledit composant copolymère HMW comprend au moins une alpha-oléfine en C3-12, de préférence du but-1-ène, de l'hex-1-ène et de l'oct-1-ène.

**10.** Polymère de polyéthylène multimodal selon la revendication 9 présentant 40 à 60 % en poids d'un composant HMW (B) et 60 à 40 % en poids d'un composant LMW (A), de préférence présentant 48 à 55 % en poids d'un composant HMW (B) et 52 à 45 % en poids d'un composant LMW (A).

**11.** Polymère de polyéthylène multimodal selon une quelconque revendication précédente présentant 0,1 à 1 % en moles de comonomère.

**12.** Polymère de polyéthylène multimodal selon une quelconque revendication précédente dans lequel ledit polymère est un copolymère avec le comonomère 1-butène.

**13.** Polymère de polyéthylène multimodal selon une quelconque revendication précédente présentant un $MFR_5$ de 1,0 à 20 g/10 min, tel que de 2,0 à 20 g/10 min.

**14.** Polymère de polyéthylène multimodal présentant 35 à 65 % d'un composant homopolymère de poids moléculaire inférieur (A) et 65 à 35 % d'un composant copolymère de poids moléculaire supérieur (B) ;

ledit polymère présentant un $MFR_2$ de 0,5 g/10 min à 2,0 g/10 min, une masse volumique de 950 kg/m$^3$ ou plus, un Mw/Mn de 6 ou plus, un FNCT de 58 h ou plus et dans lequel

$$allongement\ de\ fluage \leq 0{,}0055ln(temps) + 0{,}014$$

dans lequel l'allongement de fluage est mesuré selon l'ISO 899-1:2003 ; et
dans lequel le temps est mesuré en secondes, dans au moins la région 200 ≤ temps (s) ≤ 30 000.

**15.** Article moulé par injection ou compression, tel qu'un capuchon ou une fermeture, comprenant un polymère selon la revendication 1 à 14.

**16.** Utilisation du polymère selon l'une quelconque des revendications 1 à 14 dans la fabrication d'un article moulé par injection ou compression, tel qu'un capuchon ou une fermeture.

**17.** Procédé de préparation d'un polyéthylène selon les revendications 1 à 14 comprenant;
la polymérisation d'éthylène et optionnellement d'au moins un comonomère d'alpha-oléfine en C3-10 de façon à former un composant de poids moléculaire inférieur (A) ; et ensuite
la polymérisation d'éthylène et optionnellement d'au moins un comonomère d'alpha-oléfine en C3-10 en présence de composant (A) de façon à former un composant de poids moléculaire supérieur (B).

Figure 1. Creep strain as a function of time

Figure 2 FNCT and creep strain showed as function of G'(0.05rad/s, 190°C). Points at G' = 176 represent Ex.1  Creep strain measured at 10,000 s.

Figure 3. Example of non-domed cap (left) and domed cap (right)

Figure 4. Example of measuring non-domed cap (left) and domed caps (right)

Figure 5. Dimensions of cap used for the doming test

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- WO 2014180989 A
- EP 1940942 A
- EP 1655336 A
- EP 1655338 A
- EP 1753791 A
- WO 2005103100 A
- WO 2008137722 A
- WO 9744371 A
- WO 9618662 A
- EP 517868 A
- WO 2004055068 A
- WO 2004055069 A
- EP 0688794 A
- EP 0810235 A

## Non-patent literature cited in the description

- **B. HAGSTRÖM.** *Conference on Polymer Processing (The Polymer Processing Society),* 19 August 1997, vol. 4, 13
- **KLIMKE et al.** *Macromol. Chem. Phys.,* 2006, vol. 207, 382
- **POLLARD et al.** *Macromolecules,* 2004, vol. 37, 813
- **FILIP et al.** *J. Mag. Resn.,* 2005, vol. 176, 239
- **GRIFFIN et al.** *Mag. Res. in Chem.,* 2007, vol. 45, S1, , S198
- **J. RANDALL.** *Rev. Macromol. Chem. Phys.,* 1989, vol. C29, 201
- **HEINO, E.L. ; LEHTINEN, A. ; TANNER J. ; SEPPÄLÄ, J. ; NESTE OY.** Rheological characterization of polyethylene fractions. *Theor. Appl. Rheol., Proc. Int. Congr. Rheol,* 1992, vol. 1, 360-362
- **HEINO, E.L. ; BOREALIS POLYMERS OY.** The influence of molecular structure on some rheological properties of polyethylene. *Annual Transactions of the Nordic Rheology Society,* 1995
- Definition of terms relating to the non-ultimate mechanical properties of polymers. *Pure & Appl. Chem.,* 1998, vol. 70 (3), 701-754